(19) Europäisches Patentamt
European Patent Office
Office européen des brevets

(11) Publication number: 0 128 598 B1

(12) # EUROPEAN PATENT SPECIFICATION

(45) Date of publication of patent specification: 13.05.87

(21) Application number: 84200613.2

(22) Date of filing: 02.05.84

(51) Int. Cl.[4]: C 08 L 53/02, C 08 L 35/06, C 08 L 67/02 // (C08L53/02, 35:06, 67:02),(C08L35/06, 53:02, 67:02),(C08L67/02, 35:06, 67:02)

(54) **Thermoplastic moulding composition.**

(30) Priority: 08.06.83 US 502407

(43) Date of publication of application: 19.12.84 Bulletin 84/51

(45) Publication of the grant of the patent: 13.05.87 Bulletin 87/20

(84) Designated Contracting States: BE DE FR GB IT NL

(56) References cited: US-A-4 377 647

(73) Proprietor: SHELL INTERNATIONALE RESEARCH MAATSCHAPPIJ B.V.
Carel van Bylandtlaan 30
NL-2596 HR Den Haag (NL)

(72) Inventor: Durbin, Daniel Paul
807 Palm Grove Circle
Sugarland, TX 77478 (US)
Inventor: Lutz, Robert Gardiner
8322 Twining Oaks
Spring, TX 77379 (US)
Inventor: Danforth, Richard Louis
2306 Wallingford Drive
Missouri City, TX 77459 (US)

(74) Representative: Aalbers, Onno et al
P.O. Box 302
NL-2501 CH The Hague (NL)

EP 0 128 598 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a thermoplastic moulding composition.

Vinyl aromatic resins, such as polystyrene or high impact polystyrene, have been found to be useful in thermoplastic moulding compositions. However, such vinyl aromatic resins have poor heat distortion and impact resistance. One approach to improve these property deficiencies involves copolymerizing the vinyl aromatic monomer with an α,β-unsaturated cyclic anhydride to form copolymers such as poly(styrene-maleic anhydride). Although such copolymers have improved heat resistance, the over-all balance of properties is still inadequate.

In order to further improve the properties of such vinyl aromatic copolymers, various other polymers, such as nitrile rubber, radial styrene-diene block copolymers optionally together with a polyphenylene ether resin, and hydrogenated styrene-diene block copolymers optionally together with a polyphenylene ether resin have been blended with the copolymer. Such polymer blend compositions are still not fully satisfactory.

Further, blends of styrene-maleic anhydride copolymers, hydrogenated styrene-diene-styrene copolymers and thermoplastic polyesters have been disclosed, showing good properties especially when blended with oils. However, this oil can haze into the surface of painted parts made from the material.

The present invention provides a thermoplastic moulding composition having an improved balance of properties, such composition comprising:

(a) 10—85 parts by weight of a selectively hydrogenated block copolymer comprising at least two monoalkenylarene polymer end blocks A and at least one wholly or partly hydrogenated conjugated diene polymer mid block B, said block copolymer, wherein at least 80% of the aliphatic double bonds in block B and no more than 25% of the aromatic double bonds in block A have been hydrogenated, comprising 8—65 percent by weight of said block A;

(b) 10—80 parts by weight of a copolymer comprising an α,β-unsaturated cyclic anhydride and an aromatic compound of the formula

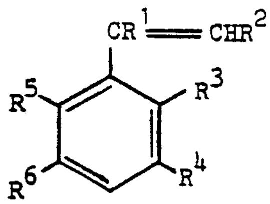

wherein $R^1$ and $R^2$ are selected from the group consisting of alkyl or alkenyl groups of from 1 to 6 carbon atoms and hydrogen; $R^3$ and $R^4$ are selected from the group consisting of chloro, bromo, hydrogen and alkyl of from 1 to 6 carbon atoms; $R^5$ and $R^6$ are selected from the group consisting of hydrogen and alkyl or alkenyl groups of from 1 to 6 carbon atoms or $R^5$ and $R^6$ may be concatenated together with hydrocarbonyl groups to form a naphthyl group;

(c) 10—80 parts by weight of a thermoplastic polyester having a molecular weight in excess of 20,000, a melting point above 120°C, and which polyester is selected from the group consisting of a polymer of pivalolactone or caprolactone, and a condensation product of a dicarboxylic acid and a glycol; and

(d) 1—50 parts by weight of a diblock copolymer comprising a monoalkenylarene or hydrogenated monoalkenylarene block and a hydrogenated conjugated diene or an alpha olefin block.

The compositions according to the invention are readily procesable in parts, possess good low temperature (−30°C) properties, are directly paintable with commercial paints, have low distortion during the paint bake cycle usually applied in the art (120°C, 30 min.), have excellent gloss, which makes them suitable for exterior automotive applications, and exhibit an improved impact/stiffness balance even without the incorporation of oil.

The component (a) block copolymers may be linear, radial or branched so long as the copolymer has at least two polymer end blocks A and at least one polymer mid block B. Linear polymers may be prepared by sequential introduction of the desired monomers into the reaction vessel comprising initiators as lithium-alkyls or dilithiostilbene, or by coupling a two segment block copolymer with a difunctional coupling agent. Branched structures, on the other hand, may be obtained by the use of suitable coupling agents having a functionality with respect to the precursor polymers of three or more. Coupling may be effected with multifunctional coupling agents such as dihaloalkanes or -alkenes and divinylbenzene, as well as certain polar compounds such as silicon halides, siloxanes or esters of monohydric alcohols and carboxylic acids. The invention applies especially to the use of selectively hydrogenated polymers having the configuration before hydrogenation of the following typical species:

polystyrene-polybutadiene-polystyrene (SBS)
polystyrene-polyisoprene-polystyrene (SIS)
poly(alpha-methylstyrene)-polybutadiene-poly(alpha-methylstyrene) and
poly(alpha-methylstyrene)-polyisoprene-poly(alpha)methylstyrene).

It will be understood that both blocks A and B may be either a homopolymer or random copolymer

block as long as the monoalkenylarenes predominate in the A blocks and the dienes predominate in the B blocks. The term "monoalkenylarene" will be taken to include styrene and its analog and homologs including alpha-methylstyrene and ring-substituted styrenes. The preferred mono-alkenylarenes are styrene and alpha-methylstyrene, and styrene is particularly preferred. The blocks B may comprise homopolymers of butadiene or isoprene and copolymers of one or both of these two dienes. When the monomer employed in butadienes, it is preferred that between 35 and 55 mol percent of the condensed butadiene units in the butadiene polymer block have 1,2 configuration. Thus, when such a block is hydrogenated, the resulting product is or resembles a regular copolymer block of ethylene and butene-1. If the conjugated diene employed is isoprene, the resulting hydrogenated product is or resembles a regular copolymer block of ethylene and propylene.

Hydrogenation of the block copolymers is preferably effected by use of a catalyst comprising the reaction products of an aluminium alkyl compound with nickel or cobalt carboxylates or alkoxides under such conditions as to hydrogenate at least 80% of the aliphatic double bonds in block B while hydrogenating no more than 25% of the aromatic double bonds in the A blocks. Preferred block copolymers are those where at least 99% of the aliphatic double bonds in block B and less than 5% of the aromatic double bonds in the A blocks have been hydrogenated.

The average molecular weights of the individual blocks may vary within certain limits. In most instances, the monoalkenylarene blocks will have number average molecular weights of 5,000—125,000, preferably 7,000—60,000, while the conjugated diene blocks will have average molecular weights of 10,000—300,000, preferably 30,000—150,000. The total average molecular weight of the block copolymer is 25,000—250,000, preferably 35,000—200,000. These molecular weights are determined by tritium counting methods or osmotic pressure measurements.

As indicated above the amount of the monoalkenylarene blocks in the block copolymer is between 8 and 65 percent by weight. Preferably this amount is between 10 and 35 percent by weight of the block copolymer.

While the average molecular weight of the individual blocks is not critical, at least within the above-specified limits, it is useful to select the type and total molecular weight of the block copolymer in order to obtain satisfactory mixing under the chosen blending conditions. Best results are obtained when the viscosity of the component (a) block copolymer and the thermoplastic resins are substantially the same at the temperature used for blending and processing. In some instances, matching of the viscosity of the component (a) block copolymer portion and the resin portions are best achieved by using two or more block copolymers or resins. For example, a blend of two block copolymers having different molecular weights or a blend of a hydrogenated SBS and ahydrogenated SIS polymer may be employed.

The component (b) copolymers are well known in the art. They comprise an aromatic compound which is represented by the formula:

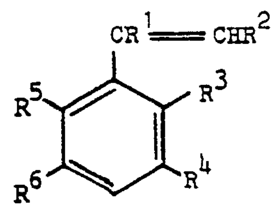

wherein $R^1$ and $R^2$ are selected from the group consisting of alkyl or alkenyl groups of from 1 to 6 carbon atoms and hydrogen; $R^3$ and $R^4$ are selected from the group consisting of chloro, bromo, hydrogen and alkyl of from 1 to 6 carbon atoms; $R^5$ and $R^6$ are selected from the group consisting of hydrogen and alkyl or alkenyl groups of from 1 to 6 carbon atoms or $R^5$ and $R^6$ may be concatenated together with hydrocarbyl groups to form a naphthyl group, Styrene is the preferred aromatic compound. These component (b) copolymers further comprise an α,β-unsaturated cyclic anhydride lime maleic anhydride, citraconic anhydride, itaconic anhydride, and aconitic anhydride. The preferred α,β-unsaturated cyclic anhydride is maleic anhydride.

These component (b) copolymers may comprise 40 to 1 mole percent of the α,β-unsaturated cyclic anhydride and from 60 to 99 mole percent of the aromatic compound. The preferred polymers will contain 25—5 mole percent of the α,β-unsaturated cyclic anhydride and 75—95 mole percent of the aromatic compound. The preparation of these copolymers is known in the art. A particularly preferred copolymer is ARCO's Dylark ® 332 which is a styrene-maleic anhydride copolymer containing about 8 mole percent maleic anhydride, the balance being styrene.

The component (c) polyester employed in the present invention have a generally crystalline structure. As already mentioned above, they are either a polymer of pivalolactone or caprolactone or a condensation product of a dicarboxylic acid and a glycol.

Among dicarboxylic acids suitable for preparing polyesters useful in the present invention are oxalic acid, malonic acid, succinic acid, glutaric acid, adipic acid, suberic acid, azelaic acid, sebacic acid, terephthalic acid, isophthalic acid, p,p'-dicarboxydiphenylsulphone, p-carboxyphenoxyacetic acid, p-carboxyphenoxypropionic acid, p-carboxyphenoxybutyric acid, p-carboxyphenoxyvaleric acid, p-carboxy-

phenoxyhexanoic acid, p,p'-dicarboxydiphenylmethane, p,p'-dicarboxydiphenylpropane, p,p'-dicarboxydiphenyloctane, 3-alkyl-4-(β-carboxyethoxy)benzoic acid, 2,6-naphthalene-dicarboxylic acid and 2,7-naphthalenedicarboxylic acid. Mixtures of dicarboxylic acids can also be employed. Terephthalic acid is particularly preferred.

Among the glycols suitable for preparing polyesters useful in the present invention are straight chain alkylene glycols of 2 to 12 carbon atoms such as ethylene glycol, 1,3-propylene glycol, 1,6-hexylene glycol, 1,10-decamethylene glycol, 1,12-do-decamethylene glycol, and aromatic glycols as pyrocatechol, resorcinol, hydroquinone, or alkyl-substituted derivatives of these compounds. Another suitable glycol is 1,4-cyclohexane dimethanol. Particularly preferred glycols are the straight chain alkylene glycols having 2 to 4 carbon atoms.

Preferred condensation products are poly(ethylene terephthalate), poly(propylene terephthalate), and poly(butylene terephthalate). The most preferred polyester is poly(butylene terephthalate). Poly(butylene terephthalate), a crystalline copolymer, may be formed by the polycondensation of 1,4-butanediol and terephthalic acid, and had the generalized formula:

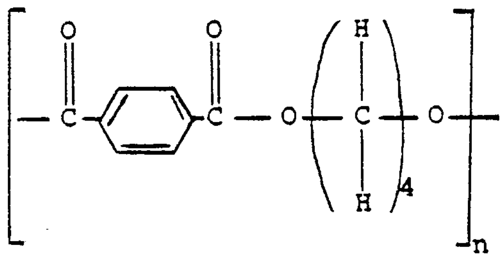

where n varies from 70 to 140. The molecular weight of the poly(butylene terephthalate) typically varies from 20,000 to 25,000.

Another useful polyester is a polymer of pivalolactone. Preferably this polymer is a pivalolactone homopolymer. Also included, however, are the copolymers of pivalolactone with not more than 50 mole percent of other beta-propiolactones, such as betapropiolactone, alpha,alpha-diethyl-beta-propiolactone and alpha-methyl-alpha-ethyl-beta-propiolactone. The term "beta-propiolactones" refers to beta-propiolactone (2-oxetanone) and to derivatives thereof which carry no substitutes at the beta-carbon atoms of the lactone ring. Preferred beta-propiolactones are those containing a tertiary or quaternary carbon atom in the alpha position relative to the carbonyl group. Especially preferred are the alpha,alpha-dialkyl-beta-propiolactones wherein each of the alkyl groups independently has from one to four carbon atoms. Examples of useful monomers are:

alpha-ethyl-alpha-methyl-beta-propiolactone,
alpha-methyl-alpha-isopropyl-beta-propilactone,
alpha-ethyl-alpha-n-butyl-beta-propiolactone,
alpha-chloromethyl-alpha-methyl-beta-propiolactone,
alpha,alpha-bis(chloromethyl)-beta-propiolactone, and
alpha,alpha-dimethyl-beta-propiolactone (pivalolactone).

Another useful polyester is a polymer of caprolactone. Typical poly(ε-caprolactones) are substantially linear polymers in which the repeating unit is

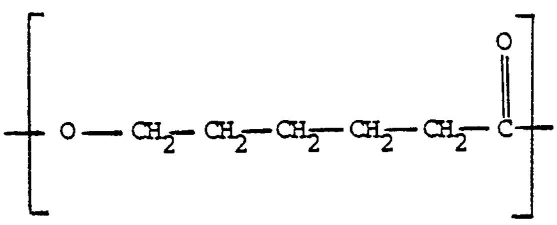

These polymers have similar properties to the polypivalolactones.

Diblock copolymers (d) according to the present invention are referred to as A—B type in which A represents a block of monoalkenylarenes or hydrogenated products thereof and B represents a block of alpha olefins or hydrogenated conjugated dienes. The average molecular weight of block A is between 5,000 and 75,000 and preferably between 9,000 and 60,000, and that of block B between 10,000 and 1,000,000 and preferably between 15,000 and 200,000.

The conjugated dienes which may be employed in forming the diblock copolymers to be later hydrogenated include especially butadiene and isoprene as well as mixtures thereof. If diblock copolymers are formed with alpha olefins, the preferred species include ethene, propene, butene, and mixtures thereof. The preferred monoalkenylarene is styrene.

The diblock copolymers comprising diene blocks are hydrogenated to reduce their olefinic unsaturation by at least 50% and preferably at least 80% of the original olefinic double bonds. Hydrogenation is preferably carried out in solution utilizing either homogeneous or heterogeneous

catalysts, such as cobalt or nickel salts or alkoxides reduced with aluminium alkyl compounds. Preferably nickel acetate, nickel octoate, or nickel acetyl-acetonate reduced with aluminiumalkyl compounds such as aluminiumtriethyl or aluminiumtriisobutyl are employed.

The polymer blends of the present invention may be compounded further with other polymers, oil, fillers, reinforcing materials, anti-oxidants, stabilizers, fire retardants, anit-blocking agents and other rubber or plastic compounding ingredients without departing from the scope of the present invention.

Reinforcing materials include glass fibres, asbestos, boron fibres, carbon and graphite fibres, whiskers, quartz, and silica fibres, ceramic fibres, metal fibres, natural organic fibres, and synthetic organic fibres. Especially preferred are reinforced polymer blends of the instant invention containing 2 to 80 percent by weight of a reinforcing material based on the total weight of the resulting reinforced blend.

The proportions of the polymers are presented below in parts by weight:

| | | Preferred |
|---|---|---|
| Selectively hydrogenated block copolymer | 10 to 85 | 30 to 70 |
| Vinyl aromatic copolymer | 10 to 80 | 15 to 40 |
| Thermoplastic polyester | 10 to 80 | 15 to 40 |
| Hydrogenated diblock copolymer | 1 to 50 | 5 to 20 |

The blending of the various polymer components may be done in any manner that produces a blend which will not delaminate on processing. For example, the various polymers may be dissolved in a solvent common for all and coagulated by admixing in a solvent in which none of the polymers are soluble. A particularly useful procedure is to intimately mix the polymers in the form of granules and/or powder in a high shear mixer. Intimate mixing is typically achieved hy employing high shear extrusion compounding machines such as twin screw compounding extruders and thermoplastic extruders having at least 20:1 length/diameter ratio and a compression ratio of 3 or 4:1.

The mixing or processing temperature is selected in accordance with the particular polymers to be blended. For example, when melt blending the polymers instead of solution blending, it will be necessary to select a processing temperature above the melting point of the highest melting point polymer. In addition, the processing temperature may also be chosen as to permit the isoviscous mixing of the polymers. Typically, the mixing or processing temperature is between 200°C and 350°C. For blends containing poly(butylene terephthalate) the mixing or processing temperature is preferably between 240°C and 300°C.

The polymer blends of the present invention can be employed in any use typically performed by engineering thermoplastics, such as metal replacement and those areas where high performance is necessary. A particularly useful end use area is for exterior decorated automotive applications.

The present invention is illustrated by the following Example.

The physical test methods used in elevation of the blends appearing in the Table are as follows:

−30°C Cold Impact Strength — Gardner Impact Test Stiffness — Tinius Olsen Stiffness Test, ASTM D—747.

## Example

Various polymer blends are prepared by first dry blending the various component particles, and then extruding the resulting mixture in a Werner-Pflederer extruder at a temperature above 240°C.

As component (a) three different selectively hydrogenated polystyrene-polybutadiene-polystyrene block copolymers are employed, wherein more than 99% of the original olefinic double bonds have been hydrogeated. The molecular weight of these block copolymers, which have been numbered 1, 2 and 3 in Table 1, is 100,000, 76,000 and 144,000 respectively and their styrene content is 30, 30 and 13%w respectively. Component (b) is Dylark® 332.

The thermoplastic polyester is poly(butylene terephthalate (PBT), having a molecular weight of 35,000 and a melting point of 225°C.

The diblock copolymer is a polystyrene-polyisoprene block copolymer wherein more than 99% of the original olefinic double bonds has been hydrogenated; the molecular weight is 142,000 and the styrene content is 37%w. Further data and results are presented in Table 1.

The compositions according to the present invention exhibit a high impact strength together with a high stiffness without the use of oil. These blends also show significant improvements in surface scuff and mar resistance and do not show signs of hazing as in the oiled blends.

TABLE 1

| Formulation (parts by weight) | 1 | 2 | 3 | 4 | 5 | 6 | 7 | 8 | 9 |
|---|---|---|---|---|---|---|---|---|---|
| SBS Block Copolymer 1→ | 36 | 60 | 58.2 | 57 | 54 | 66.6 | 47.6 | — | 12 |
| SBS Block Copolymer 2→ | 24 | — | — | — | — | — | — | — | 28 |
| SBS Block Copolymer 3→ | — | — | — | — | — | — | — | 40 | — |
| SMA | 20 | 20 | 19.4 | 19 | 18 | 14.2 | 23.8 | 25 | 25 |
| Poly(butylene terephthalate) | 20 | 20 | 19.4 | 19 | 18 | 14.2 | 23.8 | 25 | 25 |
| Oil | — | — | 3.0 | 5 | 10 | 5 | 5 | — | — |
| Diblock Copolymer | — | — | — | — | — | — | — | 10 | 10 |
| Properties | | | | | | | | | |
| −30°C Cold Impact Strength (kg.m/m) | 457 | 451 | 696 | 968 | 892 | 903 | 968 | 870 | 745 |
| Stiffness (kg/cm²/rad) | 1849 | 1510 | 1406 | 1176 | 851 | 607 | 1690 | 1979 | 2873 |

**Claims**

1. A thermoplastic moulding composition comprising:

(a) 10—85 parts by weight of a selectively hydrogenated block copolymer comprising at least two monoalkenylarene polymer end blocks A and at least one wholly or partly hydrogenated conjugated diene polymer mid block B, said block copolymer, wherein at least 80% of the aliphatic double bonds in block B and no more than 25% of the aromatic double bonds in block A have been hydrogenated, comprising 8—65 percent by weight of said block A;

(b) 10—80 parts by weight of a copolymer comprising an α,β-unsaturated cyclic anhydride and an aromatic compound of the formula

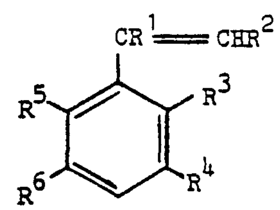

wherein $R^1$ and $R^2$ are selected from the group consisting of alkyl or alkenyl groups of from 1 to 6 carbon atoms and hydrogen; $R^3$ and $R^4$ are selected from the group consisting of chloro, bromo, hydrogen and alkyl of from 1 to 6 carbon atoms; $R^5$ and $R^6$ are selected from the group consisting of hydrogen and alkyl or alkenyl groups of from 1 to 6 carbon atoms or $R^5$ and $R^6$ may be concatenated together with hydrocarbyl groups to form a naphthyl group;

(c) 10—80 parts by weight of a thermoplastic polyester having a molecular weight in excess of 20,000, a melting point above 120°C, and which polyester is selected from the group consisting of a polymer of pivalolactone or caprolactone, and a condensation product of a dicarboxylic acid and a glycol; and

(d) 1—50 parts by weight of a diblock copolymer comprising a monoalkenylarene or hydrogenated monoalkenylarene block and a hydrogenated conjugated diene or an alpha olefin block.

2. A thermoplastic moulding composition according to claim 1, characterized in that the selectively hydrogenated block copolymer is a linear ABA block copolymer.

3. A thermoplastic moulding composition according to claim 1, characterized in that the copolymer comprising the α,β-unsaturated cyclic anhydride and the aromatic compound is a styrene-maleic anhydride copolymer.

4. A thermoplastic moulding composition according to claims 1 to 3, characterized in that the thermoplastic polyester is a condensation product of a dicarboxylic acid with glycol.

5. A thermoplastic moulding composition according to claim 4, characterized in that the thermoplastic polyester is poly(butylene terephthalate).

**Patentansprüche**

1. Thermoplastiche Formmasse umfassend

(a) 10 bis 85 Gew.-Teile einer selektiv hydrierten Blockcopolymeren, umfassend mindestens zwei Endblöcke A aus einem Monoalkenylarenpolymeren und mindestens einen Zwischen-block B aus einem partiell hydrierten Polymeren eines konjugierten Diens, wobei mindestens 80% der aliphatischen Doppelbindungen im Block B und nicht mehr als 25% der aromatischen Doppelbindungen in den Blöcken A hydriert worden sind und die Blöcke A 8 bis 65 Gew.-% des Blockcopolymeren ausmachen,

(b) 10 bis 80 Gew.-Teile eines Copolymeren aus einem α,β-unsättigten cyclishen Anhydrid und einer aromatischen Verbindung der Formel

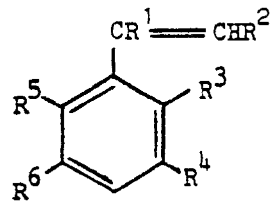

in der $R^1$ und $R^2$ ausgewählt sind aus der Gruppe bestehend aus Alkyl- oder Alkenylgruppen mit 1 bis 6 Kohlenstoffatomen und Wasserstoff; $R^3$ und $R^4$ ausgewählt sind aus der Gruppe bestehend aus Chlor, Brom, Wasserstoff und Alkyl-(gruppen) mit 1 bis 6 Kohlenstoffatomen; $R^5$ und $R^6$ ausgewählt sind aus der Gruppe bestehend aus Wasserstoff und Alkyl- oder Alkenylgruppen mit 1 bis 6 Kohlenstoffatomen oder $R^5$ und $R^6$ mit Kohlenwasserstoffgruppen unter Bildung einer Naphthylgruppe verkettet sein können;

(c) 10 bis 80 Gew.-Teile eines thermoplastichen Polyesters mit einem Molekulargewicht über 20 000, einem Schmelzpunkt über 120°C, der ausgewählt ist aus der Gruppe bestehend aus einem Polymeren von Pivalolacton oder Caprolacton und einem Kondensationsprodukt aus einer Dicarbonsäure mit einem Glykol; und

(d) 1 bis 50 Gew.-Teile eines Zweiblockcopolymeren umfassend einen Monoalkyenylaren-Block oder einen hydrierten Monoalkenylaren-Block und einen hydrierten Block aus einem konjugierten Dien oder einen α-Olefin-Block.

2. Thermoplastische Formmasse nach Anspruch 1, dadurch gekennzeichnet, daß das selektiv hydrierte Blockcopolymer ein lineares ABA Blockcopolymer ist.

3. Thermoplastische Formmasse nach Anspruch 1 oder 2, dadurch gekennzeichnet, daß das Copolymer enthaltend das α,β-ungesättigte cyclische Anhydrid und die aromatische Verbindung ein Copolymer aus Styrol und Maleinsäureanhydrid ist.

4. Thermoplastische Formmasse nach Anspruch 1 bis 3, dadurch gekennzeichnet, daß der thermoplastische Polyester ein Kondensationsprodukt aus einer Dicarbonsäure und einem Glykol ist.

5. Thermoplastische Formmasse nach Anspruch 4, dadurch gekennzeichnet, daß der thermoplastische Polyester Poly(butylenterephthalat) ist.

**Revendications**

1. Composition de moulage thermoplastique comprenant:

(a) 10—85 parties en poids d'un copolymère séquencé sélectivement hydrogéné comprenant au moins deux blocs terminaux A de type polymère de monoalcénylarène et au moins un bloc central B de type polymère de diène conjugé entièrement ou partiellement hydrogéné, le dit copolymère séquence, dans lequel au moins 80% des doubles liaisons aliphatiques contenues dans le bloc B et pas plus de 25% des doubles liaisons aromatiques contenues dans le bloc A ont été hydrogénées, comprenant 8—65% en poids dudit bloc A;

(b)10—80 parties en poids d'un copolymère comprenant un anhydride cyclique α,β-insaturé et un composé aromatiqué de formule

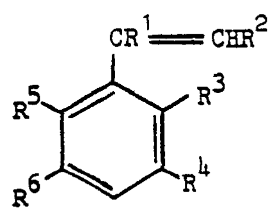

dans laquelle $R^1$ et $R^2$ sont choisis dans le groupe constitué par des groupes alkyle ou alcényle de 1 à 6 atomes de carbone et un hydrogène; $R^3$ et $R^4$ sont choisis dans le groupe constitué par un groupe chloro, bromo, un hydrogène et des groupe alkyle de 1 à 6 atomes de carbone; $R^5$ et $^6$ sont choisis dans le groupe

constitué par un hydrogène et des gropes alkyle ou alcényle de 1 à 6 atomes de carbone ou $R^5$ et $R^6$ peuvent être enchaînés avec des groupes hydrocarbyle pour former un groupe naphtyle;

(c) 10—80 parties en poids d'un polyester thermoplastique ayant un poids moléculaire supérieur à 20 000, un point de fusion supérieur à 120°C, ce polyester étant choisi dans le groupe constitué par un polymère de pivalolactone ou de caprolactone, et un produit de condensation d'un acide dicarboxylique et d'un glycol; et

(d) 1—50 parties en poids d'un copolymère diséquencé comprenant un bloc de type monoalcénylarène ou monoalcénylarène hydrogéné et un bloc de type diène conjugué hydrogéné ou alpha-oléfine.

2. Composition de moulage thermoplastique selon la revendication 1, caractérisée en ce que le copolymère séquencé sélectivement hydrogéné est un copolymère séquencé ABA linéaire.

3. Composition de moulage thermoplastique selon la revendication 1 ou 2, caractérisée en ce que le copolymère comprenant l'anhydride cyclique α,β-insaturé et le composé aromatique est un copolymère styrène/anhydride maléique.

4. Composition de moulage thermoplastique selon les revendications 1 à 3, caractérisée en ce que le polyester thermoplastique est un produit de condensation d'un acide dicarboxylique et d'un glycol.

5. Composition de moulage thermoplastique selon la revendication 4, caractérisée en ce que le polyester thermoplastique est un poly(téréphtalate de butylène).